# EUROPÄISCHE PATENTSCHRIFT

(11) **EP 0 669 355 B1**
(45) Veröffentlichungstag und Bekanntmachung des Hinweises auf die Patenterteilung: **15.11.2000**
(21) Anmeldenummer: 94120794.6
(22) Anmeldetag: 28.12.1994
(51) Int. Cl.: C08G 18/80

(54) **Verfahren zur Herstellung von blockierten Polyisocyanaten und deren Verwendung in Polyurethan-Lacksystemen**
Process for the preparation of blocked polyisocyanates and their use in polyurethane lacquer systems
Procédé de préparation de polyisocyanates bloqués et leur utilisation dans des systèmes de vernis de polyuréthane

(30) Priorität: 28.02.1994 DE 4406443
(43) Veröffentlichungstag der Anmeldung: 30.08.1995
(73) Patentinhaber: Degussa-Hüls Aktiengesellschaft, 60287 Frankfurt am Main (DE)
(72) Erfinder: Gras, Rainer, Dr., D-44879 Bochum (DE); Brandt, Siegfried, Dr., D-45721 Haltern (DE)

(56) Entgegenhaltungen:
- BE-A- 571 279
- US-A- 4 055 550
- US-A- 4 055 551
- US-A- 4 868 298

## Beschreibung

Die vorliegende Erfindung betrifft ein einfaches Verfahren zur Herstellung total oder partiell blockierter Polyisocyanate sowie ihre Verwendung vor allem in licht- und wetterstabilen Polyurethan-(PUR)-Lacken.

Zur Formulierung dieser PUR-Lacksysteme, insbesondere PUR-Pulverlacke, werden als Vernetzer im großen Umfang blockierte Polyisocyanate eingesetzt, insbesondere aliphatische und/oder (cyclo)aliphatische, weil diese zu hellfarbigen Produkten führen und speziell die (cyclo)aliphatischen Vernetzer mahlbar und damit zur Pulverlackherstellung besonders geeignet sind.

Bei den PUR-Pulverlacken, die erstmals 1970 in der Literatur beschrieben wurden, nehmen die in der DE-PS 27 35 497 vorgestellten PUR-Pulver infolge ihrer überlegenen Witterungs- und Wärmefarbstabilität eine herausragende Stellung ein.

Neben blockierten, gegebenenfalls isocyanuratgruppenhaltigen Polyisocyanaten sind auch andere Oligomere bekannt, wie Urethan-, Biuret- oder Harnstoffgruppen-haltige Polyisocyanate, deren NCO-Gruppen ebenfalls blockiert sind. Die Blockierung der NCO-Gruppen ist für den zeitweisen Schutz unerläßlich, um stabile Zweikomponenten-Lacksysteme herstellen zu können. Auch Gemische werden dabei verwendet.

Allen diesen blockierten Polyisocyanaten ist gemeinsam, daß sie diskontinuierlich im Reaktor synthetisiert werden, wie z. B. in der DE-PS 27 12 931 beschrieben wird; entsprechend diskontinuierlich wird die Synthese der genannten Oligomere durchgeführt. Nachteilig sind hierbei die langen Reaktionszeiten bei hohen Temperaturen, die zur Verfärbung der Reaktionsprodukte führen können. Außerdem bedingen lange Reaktionszeiten hohe Verfahrenskosten.

Besonderes Interesse haben Vernetzer auf Basis von Isocyanuraten, also trimerisierten Diisocyanaten, gefunden wegen ihrer höheren Molmasse und ihrer ≥ Trifunktionalität, insbesondere das Isocyanurat des 3-Isocyanatomethyl-3.5.5-trimethylcyclohexylisocyanat (Isophorondiisocyanat, IPDI).

Die hohe Schmelzviskosität sowohl des Isocyanurates und noch mehr die des blockierten Vernetzers machen bei direktem Einsatz der Reaktanten hohe Temperaturen erforderlich, wie es in den DE-PSS 27 12 931 und 33 28 130 beschrieben wird. Bei diesen hohen Temperaturen, die zu Verfärbungen und Trübungen führen, liegen außerdem bereits hohe Konzentrationen an freiem Blockierungsmittel und damit entsprechend hohe Konzentrationen an freien - nicht blockierten - NCO-Gruppen vor, da das Reaktions-Gleichgewicht in unerwünscht hohem Maß auf der Seite der Einsatzstoffe liegt. Zudem führt das Verdampfen der Blockierungsmittel zu Geruchsbelästigungen. Da dieser lösemittelfreie Weg problematisch war, wurden diese Vernetzer bisher in Lösemittel bei relativ niedrigen Temperaturen von 80 bis 100 °C synthetisiert; die NCO-Gruppen können bei dieser Verfahrensweise nahezu vollständig umgesetzt werden.

Nachteilig bei derartig durchgeführten Synthesen ist, daß das Lösemittel nachträglich wieder entfernt werden muß, wenn die blockierten Polyisocyanate im Pulverlackbereich Anwendung finden sollen. Diese Maßnahme müßte ebenfalls bei schonenden Temperaturen - unterhalb der Deblockierungstemperatur - im Vakuum unter Einsatz von Dünnschichtverdampfern, Filmtrudern oder Extrudern erfolgen, ist aber bisher bei extrem hohen Viskositäten dieser Produkte technisch nicht durchführbar.

Aufgabe der vorliegenden Erfindung ist es daher, ein weniger aufwendiges und die Produktqualität steigerndes Verfahren bzw. generell ein Verfahren zur Herstellung total oder partiell blockierter Polyisocyanate mit niedrigen bis extrem hohen Viskositäten für die Formulierung von PUR-Lacksystemen zur Verfügung zu stellen, welches die genannten Nachteile nicht besitzt.

Überraschenderweise wurde gefunden, daß die Blockierung der NCO-Gruppe und/oder Kettenverlängerung direkt, kontinuierlich ohne Lösemittel und trotz hoher Schmelzviskosität in der Schmelze durchgeführt werden kann, wenn bestimmte Verfahrensbedingungen eingehalten werden; eine Kettenverlängerung kann vielfach gemeinsam mit der Blockierung in Form eines Einstufen-Verfahrens erfolgen. Nach dem nachfolgend beschriebenen Verfahren können Blockierungen von Polyisocyanaten u. a. bei hohen Temperaturen, die bereits deutlich im Respaltbereich liegen, durchgeführt werden, ohne daß dabei Trübungen und/oder Verfärbungen im Reaktionsprodukt auftreten und ohne daß höhere freie NCO-Gehalte entstehen als bei der Vernetzer-Synthese im Lösemittel.

Gegenstand der vorliegenden Erfindung ist ein Verfahren zur Herstellung von total oder partiell blockierten Polyisocyanaten auf Basis eines Blockierungsmittels und eines mindestens zwei freie NCO-Gruppen enthaltenden Polyisocyanats, gegebenenfalls in Gegenwart eines Kettenverlängerers, welches dadurch gekennzeichnet ist, daß die total oder partiell blockierten Polyisocyanate mit Viskositäten ≥ 150.000 mPa.s in einem Intensiv-Kneter lösemittelfrei und kontinuierlich hergestellt werden.

Das Prinzip des Verfahrens besteht darin, daß die Reaktanten kontinuierlich in einem Intensiv-Kneter kurzzeitig auf geeignete, hohe Temperaturen erhitzt und homogen gemischt werden, wobei sie vollständig oder weitgehend ausreagieren, und dann entsprechend der Gleichgewichtseinstellung gezielt abgekühlt werden, wobei der Umsatz vervollständigt werden kann.

Als Intensiv-Kneter zur Durchführung der Synthese können Conterna-Maschinen und speziell Ein- und Mehrwellenextruder, insbesondere Zweiwellenextruder, eingesetzt werden.

In dem Intensiv-Kneter erfolgt durch entsprechende bekannte Bestückung der Mischkammern und Zusammensetzung der Schneckengeometrie einerseits eine intensive, rasche Durchmischung der hochviskosen Produktströme bei gleichzeitigem intensivem Wärmeaustausch und andererseits eine gleichmäßige Durchströmung in Längsrichtung mit möglichst einheitlicher Verweilzeit. Die einzelnen Gerätegehäuse oder -abschnitte sind unterschiedlich temperierbar.

Die Umsetzungsprodukte werden dem Intensiv-Kneter in getrennten Produktströmen zwischen Raumtemperatur und 120 °C zugeführt. Bei mehr als zwei Produktströmen können diese auch gebündelt zugeführt werden. Das oder die Blockierungsmittel und/oder Kettenverlängerer und/oder Katalysatoren - also nicht miteinander reagierende Ausgangsstoffe sowie Zuschlagstoffe - können zu einem Produktstrom zusammengefaßt werden.

Die Temperaturen in den Intensiv-Knetern bzw. Extrudern betragen 60 bis 200 °C, vorzugsweise 90 bis 180 °C, und insbesondere 110 bis 170 °C. Eine Nachreaktionszone kann angefügt werden.

Zur nachträglichen gezielten Abkühlung bzw. Nachreaktion können beispielsweise eingesetzt werden: Rohrbündel, Rohrschlangen, Metalltransportbänder, Luftförderer, Kühlwalzen u. ä., wobei Temperaturgradienten bzw. -zonen einstellbar sein sollen.

Die Konfektionierung wird je nach Viskosität des den Intensiv-Kneter und/oder die Nachreaktionszone verlassenden Produkts zunächst durch weitere Abkühlung mittels entsprechender vorgenannter Gerätschaften auf eine zur späteren Absackung/Silierung hinreichende Temperatur eingeleitet, wobei der Absackung eine Zerkleinerung vorgeschaltet ist. Während des Abkühlens kann an geeigneter Stelle eine Vorprägung des bevorzugt bandförmig anfallenden Produkts erfolgen, die eine nachfolgende Zerkleinerung in eine gewünschte Partikelgröße bzw. Granulatform mittels Walzenbrecher, Stiftmühle, Hammermühle oder ähnlichem vorbereitet und erleichtert sowie den Staubanfall vermindert. Bei Anwendung eines Kühlwalzenstuhls läßt sich diese Vorprägung damit kombinieren und der nachfolgend anfallende Staubanteil unmittelbar rückführen und wieder in das Produkt einarbeiten.

Als Ausgangsverbindungen für die erfindungsgemäß synthetisierten Produkte kommen folgende Polyisocyanate infrage: aliphatische, (cyclo)aliphatische und araliphatische Diisocyanate, wie sie z. B. in Houben-Weyl, Methoden der organischen Chemie, Band 14/2, S. 61 - 70, und dem Artikel von W. Siefken in Justus Liebigs Annalen der Chemie 562, S. 75 - 136, beschrieben werden, wie 1.4-Tetramethylendiisocyanat, 1.6-Hexamethylendiisocyanat, Methyl-pentamethylendiisocyanat, 2.2.4(2.4.4)-Trimethyl-1.6-hexamethylendiisocyanat (TMDI), Cyclohexan-1.3- und -1.4-diisocyanat, 3-(Isocyanatomethyl-3.5.5-trimethylcyclohexylisocyanat (Isophorondiisocyanat, IPDI), Hexahydroduroldiisocyanat, 4.4'-Diisocyanato-dicyclohexylmethan (HMDI), Hexahydroxylylendiisocyanat-1.4 und -1.3 sowie m- oder p-Tetramethylxylylendiisocyanat.

Unter Polyisocyanaten werden im Sinne der vorliegenden Erfindung auch Oligomere, gegebenenfalls zusammen mit monomeren Diisocyanaten, verstanden, die Isocyanurat-, Biuret- oder Urethangruppen enthalten und deren Herstellung nach bekannten Methoden der Isocyanatchemie erfolgt. Diese Oligomeren werden vor allem in den Intensiv-Knetern eingesetzt. Weiterhin werden darunter auch solche Polyisocyanate verstanden, die durch Molekülvergrößerung mit den in der Isocyanatchemie gebräuchlichen sogenannten Kettenverlängerungsmitteln, wie Diolen und/oder Triolen, hergestellt werden, wobei das OH/NCO-Äquivalenzverhältnis 1 : 2 bis 7 betragen kann.

Diole sind z. B.: Ethylenglykol (E), Propylenglykol, wie 1.2- und 1.3-Propandiol, 2.2-Dimethylpropandiol-1.3 (NPG), Butandiol-1.4, Diethylenglykol (DEG), Hexandiol (HD), 3-Methylpentandiol, 2.2.4(2.4.4)-Trimethylhexandiol (TMH-d), Dodecandiol-1.12, Oktadecandiol-1.18, Hydroxypivalinsäureneopentylglykolester, trans- und cis-1.4-Cyclohexandimethanol (CHDM). Diole im Sinne der Erfindung sind auch solche, die zusätzlich zu den OH-Gruppen noch 1 bis 10 Estergruppen im Molekül enthalten können und z. B. durch Kondensation von Diolen mit Dicarbonsäuren nach der Gleichung 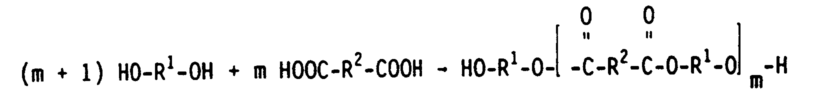 hergestellt werden, wobei R¹ gegebenenfalls substituierter C₂₋₁₈-Alkylenrest, R² = gegebenenfalls substituierter C₂₋₁₀-Alkylenrest, 1.2-, 1.3-, 1.4-Phenylenrest, m = 1 - 15, sind.

Zu den Polyolen werden gezählt: Trimethylolethan, Trimethylolpropan (TMP), Trishydroxyethylisocyanurat (THEIC), Pentaerythrit, Dipentaerythrit, Sorbit, Mannit.

Als Blockierungsmittel sind gebräuchlich: Phenole, Alkohole, Acetessigsäureethylester, Lactame - insbesondere Caprolactam (CL), Oxime - insbesondere Acetonoxim, Methylethylketoxim (MEK-ox), Cyclohexanonoxim (C-ox), Methylisobutylketoxim, Imidazoline - insbesondere Phenylimidazolin. Das NCO/Blockierungsmittel-Verhältnis beträgt 1 : 1,2-0,5.

Zur Beschleunigung der Umsetzung sowohl bei einer Kettenverlängerung als auch bei der Blockierung können Katalysatoren eingesetzt werden. Geeignet sind organische Sn-II- und Sn-IV-Verbindungen, wie Sn-octoat, Dibutylzinndilaurat (DBTL) und Dibutylzinndiacetat oder Zinkoctoat sowie andere bekannte und in der Isocyanat-Chemie übliche Verbindungen. Die Katalysatorkonzentration liegt zwischen 0,01 und 2 Gew.-%, vorzugsweise zwischen 0,05 und 1 Gew.-%.

Ein weiterer Gegenstand der vorliegenden Erfindung ist die Verwendung der erfindungsgemäß blockierten Polyisocyanate zur Herstellung lagerstabiler, hitzehärtbarer PUR-Pulverlacke und lösemittelhaltiger Einkomponenten-PUR-Einbrennlacke.

Als Reaktionspartner für PUR-Pulverlacke kommen Verbindungen infrage, welche solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan- und (Thio)-Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Malminabkömmlinge, Celluloseester und -ether, teilweise verseifte Homo- und Copolymerisate von Vinylestern, insbesondere aber Polyester und Acrylatharze.

Die einzusetzenden hydroxylgruppenhaltigen Polyester haben eine OH-Funktionalität von 2 bis 5, bevorzugt von 3 bis 4,2, ein mittleres Molekulargewicht von 1 800 bis 5 000, bevorzugt von 2 300 bis 4 500, eine OH-Zahl von 25 bis 180 mg KOH/g, bevorzugt von 30 bis 140 mg KOH/g, eine Viskosität von < 80 000 mPa·s, bevorzugt von < 60 000 mPa·s, besonders bevorzugt von < 40 000 mPa·s, bei 160 °C und einem Schmelzpunkt von ≥ 70 °C bis ≤ 120 °C, bevorzugt von ≥ 75 °C bis ≤ 100 °C.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal- (Ts), Isophthal- (Is), Trimellit-, Pyromellit-, Tetrahydrophthal-, Hexahydrophthal-, Hexahydroterephthal-, Di- und Tetrachlorphthal-, Endomethylentetrahydrophthal-, Glutar-, Malein- und Fumarsäure bzw. - soweit zugänglich - deren Anhydride, Terephthalsäuredimethylester (DMT), Terephthalsäure-bis-glykolester, weiterhin cyclische Monocarbonsäure, wie Benzoesäure, p-tert.-Butylbenzoesäure oder Hexahydrobenzoesäure.

Als mehrwertige Alkohole kommen z. B. Ethylenglykol, Propylenglykol-1.2 und -1.3, Butylenglykol-1.4 und -2.3, Di-β-hydroxyethylbutandiol, Hexandiol-1.6, Octandiol-1.8, Neopentylglykol, Cyclohexandiol, Bis-(1.4-hydroxymethyl)-cyclohexan, 2.2-Bis-(4-hydroxycyclohexyl)-propan, 2.2-Bis-(4-β-hydroxyethoxy)-phenyl-propan, 2-Methyl-propandiol-1.3, 3-Methyl-pentandiol-1.3, 3-Methyl-pentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage.

Auch Mono- und Polyester aus Hydroxycarbonsäuren, z. B. Hydroxypivalinsäure, ω-Hydroxydecansäure, ω-Hydroxycapronsäure, Thioglykolsäure, können eingesetzt werden, ebenso Lactone, z. B. ε-Caprolacton. Polyester aus den obengenannten Polycarbonsäuren bzw. deren Derivaten und Polyphenolen, wie Hydrochinon, Bisphenol-A, 4.4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1.6 und anderen Polyolen durch übliche Kondensationsreaktionen, z. B. mit Phosgen oder Diethyl- bzw. Diphenylcarbonat, oder aus cyclischen Carbonaten wie Glykolcarbonat oder Vinylidencarbonat, sind durch Polymerisation in bekannter Weise erhältlich. Ferner können eingesetzt werden Polyester der Kieselsäure, Polyester der Phosphorsäure, z. B. aus Methan-, Ethan-, β-Chlorethan-, Benzol- oder Styrolphosphorsäure, -phosphorsäurechlorid oder -phosphorsäureester und Polyalkoholen oder Polyphenolen der obengenannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Alkylalkohol oder Acrylsäure, erhältlichen Produkte.

Bevorzugte Polyester sind auch die Reaktionsprodukte von Polycarbonsäuren und Glycidylverbindungen, wie sie z. B. in der DE-OS 24 10 513 beschrieben sind.

Beispiele für Glycidylverbindungen, die verwendet werden können, sind Ester des 2.3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid und Glycidylether, z. B. Octylglycidylether.

Als Dicarbonsäuren können bei diesem Verfahren sämtliche unter II im folgenden aufgeführten Polycarbonsäuren verwendet werden; Monocarbonsäuren, welche beispielsweise unter II aufgeführt sind, können ebenfalls eingesetzt werden.

Bevorzugte Komponenten sind auch monomere Ester, z. B. Dicarbonsäure-bis-hydroxy(alkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:
I. Alkohole mit 2 bis 24, vorzugsweise 2 bis 10 C-Atomen, und 2 bis 6 an nicht-aromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
II. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellithsäure, Azelainsäure;
III. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie "Konjuvandol"-Fettsäure sowie deren Gemische, wobei die Fettsäuren auch als Glyceride einsetzbar sind und unter Umesterung und/oder Dehydratisierung umgesetzt werden können;
IV. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1 - 5, 21, 23, 40, 44, Georg Thieme Verlag, Stuttgart, 1963, oder bei C. R. Martens, Alkyd Resins, 51 - 59, Reinhold Plastics Appl. Series, Reinhold Publishing Comp., New York, 1961, beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können: Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure und Methacrylsäurealkylester mit 1 bis 18 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechende Methacrylatsäureester; Acrylsäure- und Methacrylsäurecyclohexylester; Acrylnitril und Methacrylnitril, Acrylamid und Methacrylamid; N-Methoxymethyl(meth)acrylsäureamid.

Besonders bevorzugte Acrylatharze sind Copolymere aus
a. 0 bis 50 Gew.-% der Acryl- oder Methacrylsäure mit zwei oder mehrwertigen Alkoholen, wie Butandiol-(1.4)-monoacrylat, Hydroxypropyl(meth)acrylat; ferner Vinylglykol, Vinylthioethanol, Allylalkohol, Butandiol-1.4-monovinylether;
b. 5 bis 95 Gew.-% Ester der Acrylsäure oder Methacrylsäure mit einwertigen Alkoholen, die 1 bis 12 Kohlenwasserstoffatome enthalten, wie z. B. Methylmethacrylat, Ethylacrylat, n-Butylacrylat oder 2-Ethylhexylacrylat;
c. 0 bis 50 Gew.-% aromatische Vinylverbindungen, wie Styrol, Methylstyrol oder Vinyltoluol;
d. 0 bis 20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol-(meth)acrylamid sowie Glycidyl(meth)acrylat, wobei der Anteil der Gruppe a. und/oder b. mindestens 5 Gew.-% betragen.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3.3-Bis-(chlormethyl)-oxacyclobutan, Tetrahydrofuran, Styroloxid, dem Bis-(2.5)epoxypropylether des Diphenylolpropans oder Epichlorhydrin mit sich selbst, z. B. in Gegenwart von BF₃, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1.3) oder -(1.2), Pentamethylenglykol, Hexandiol, Decamethylenglykol, Trimethylolpropan, 4.4'-Dihydroxydiphenylpropan, Anilin, Ammoniak, Ethanolamin, Ethylendiamin, Di(β-hydroxypropyl)-methylamin, Di-(β-hydroxyethyl)-anilin, Hydrazin sowie auch hydroxyalkylierten Phenolen, wie z. B. 0.0-Di-(β-hydroxyethoxy)-resorcin, hergestellt werden.

Ebenso können hydroxylgruppenhaltige Polyurethane und/oder Polyharnstoffe eingesetzt werden.

Als Polyhydroxylverbindungen können selbstverständlich Gemische mehrerer Stoffe eingesetzt werden.

Das Mischungsverhältnis von hydroxylgruppenhaltigen Polymeren und Isocyanatkomponente wird in der Regel so gewählt, daß auf eine OH-Gruppe 0,6 - 1,2, bevorzugt 0,8 - 1,1, ganz besonders bevorzugt 1,0 freie und/oder blockierte NCO-Gruppen kommen.

Die Isocyanatkomponente wird für die Herstellung von PUR-Pulverlacken mit dem geeigneten hydroxylgruppenhaltigen Polymeren und gegebenenfalls Katalysatoren sowie Pigmenten, Füllstoffen und Verlaufmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 6 Minuten auf eine Temperatur von 150 bis 220 °C, vorzugsweise 30 bis 8 Minuten bei 180 bis 210 °C, erhitzt.

Die Isocyanatkomponente kann zur Herstellung lösemittelhaltiger PUR-Einkomponenten-Einbrennlacke in hierfür geeigneten Lösemitteln gelöst und mit den für diesen Anwendungsbereich geeigneten hydroxylgruppenhaltigen Polyestern/Acrylatharzen homogenisiert werden und in bekannter Weise mit den vorgenannten Zuschlagstoffen formuliert werden. Für die erfindungsgemäßen Einkomponenten-Einbrennlacke geeignete Lösemittel sind solche, deren unterer Siedepunkt bei etwa 100 °C liegt. Die obere Grenze des Siedepunktes des Lösemittels ist von den jeweiligen Einbrenntemperaturen abhängig. Wenn man bei höheren Temperaturen einbrennt, müssen die Siedepunkte der zu verwendenden Lösemittel bei höheren Temperaturen liegen. Als Lösemittel kommen unter anderem folgende infrage: Kohlenwasserstoffe, wie z. B. Toluol, Xylol, SOLVESSO® 100, 150 und 200 (Aromatengemische der Firma Esso), Tetralin, Decalin, Ester, wie z. B. Essigsäurebutylester und -hexylester, Ethylglykolacetat, Butylglykolacetat, Methoxypropylacetat (MOP-A) usw., Ketone, wie z. B. Methylisobutylketon, Diisobutylketon, Isophoron. Die genannten Lösemittel können auch als Gemische eingesetzt werden.

Die PUR-Einkomponenten-Einbrennlacke eignen sich insbesondere für die Applikation auf Metalloberflächen, aber auch auf Gegenständen aus anderer Materialien, wie Glas oder Kunststoff. Die erfindungsgemäßen Lacke finden auch Anwendung in der Coil-Coating-Lackierung für witterungsbeständige Ein- und Zweischichtlackierungen. Der Auftrag der lösemittelhaltigen, gegebenenfalls pigmentierten Lacksysteme erfolgt durch Rakeln, Rollen, Spritzen, Gießen etc.. Die Härtung der erfindungsgemäßen Einkomponenten-PUR-Einbrennlacke erfolgt - je nach Anwendung - in einem Temperaturbereich von 140 bis 350 °C, vorzugsweise zwischen 180 bis 300 °C, in einer Zeit von 30 Minuten bis 30 Sekunden. Die Lackfilme weisen hervorragende lacktechnische Eigenschaften, insbesondere Flexibilität und Wetterbeständigkeit auf.

Das erfindungsgemäße Verfahren wird nachfolgend anhand von Beispielen beschrieben. Die Dosierung der Reaktionskomponente wird dabei nicht näher behandelt, sie erfolgt mit Hilfe der üblichen Dosierpumpen bzw. Bandwaagen.

### AA Herstellung der erfindungsgemäßen Verfahrensprodukte im Intensiv-Kneter

### I. Synthese total oder partiell blockierter Polyisocyanate ohne Kettenverlängerer gemäß Tabelle 6

In das Einzugsgehäuse eines Doppelschneckenextruders wurden gleichzeitig und kontinuierlich das Blockierungsmittel und das aus Isophorondiisocyanat erzeugte Isocyanurat (IPDI-Is) oder ein Gemisch aus IPDI-Is und Desmodur N 3300 oder Desmodur N 3200 oder IPDI eingebracht. Das BL wurde mit einer Temperatur von 20 bis 120 °C und die Polyisocyanatkomponente mit einer Temperatur von 60 bis 160 °C zudosiert. Der Katalysator war in einer der beiden Komponenten gelöst. Der eingesetzte Extruder setzt sich aus 10 Gehäusen, die über 5 Heizzonen thermisch gesteuert werden, zusammen. Die Temperaturen der Heizzonen wurden wie folgt eingestellt: 1. Heizzone 130 - 150 °C, 2. Zone 110 - 180 °C, 3. Zone 90 - 150 °C, 4. Zone 80 - 160 °C und 5. Zone 70 - 150 °C. Die zur intensiven Durchmischung und Förderung eingesetzte Doppelschnecke war eingeteilt in Förderzonen und Knetzonen. Die Drehzahl der Doppelschnecke beträgt 50 bis 380 Upm. Das Reaktionsprodukt, das in einer Menge von 10 bis 180 kg/h anfällt, wurde entweder abgekühlt, anschließend zerkleinert oder formiert und abgesackt oder bereits die Schmelze formiert, abgekühlt und abgesackt. Zur Vervollständigung des Umsatzes kann das Produkt durch einen aufgeheizten Wärmetunnel gefahren werden.

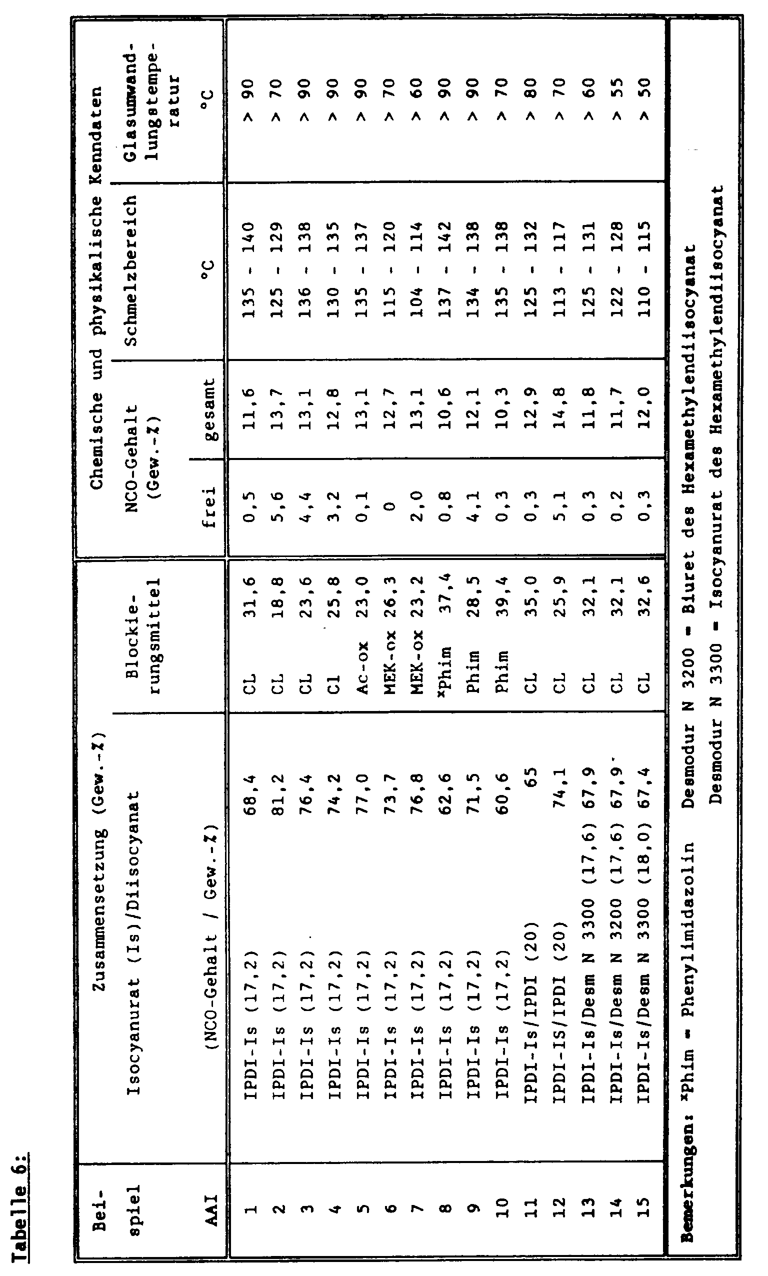

### II. Synthese total oder partiell blockierter Polyisocyanate mit Kettenverlängerern gemäß Tabelle 7

Blockiertes, mit Oxyester kettenverlängertes Polyisocyanat wurde hergestellt, indem IPDI-Is mit einer Temperatur von 150 bis 190 °C in einen Doppelschneckenextruder eingespeist wurde, wobei gleichzeitig eine Mischung aus Oxyester gemäß Beispiel B 6 und Verkappungsmittel mit einer Temperatur von 50 bis 120 °C zudosiert wurden. Die Mengenverhältnisse wurden dabei so eingestellt, daß die NCO-Äquivalente gleich der Summe aus OH-Äquivalenten und Molen Verkappungsmittel waren. Das Verhältnis NCO : OH belief sich etwa auf 3 : 1. Die Umsetzung kann ohne Katalysatorzugabe erfolgen. Der eingesetzte Extruder setzt sich aus 10 Gehäusen, die über 5 Heizzonen thermisch gesteuert werden, zusammen. Die Temperaturen der Heizzonen wurden wie folgt eingestellt: 1. Heizzone 130 - 200 °C, 2. Zone 110 - 180 °C, 3. Zone 90 - 150 °C, 4. Zone 80 - 160 °C und 5. Zone 70 - 150 °C. Die Drehzahl der Doppelschnecke betrug 100 bis 300 Upm. Die Doppelschnecke setzt sich aus Förderzonen und Knetzonen zusammen. Das Reaktionsprodukt wurde danach durch einen temperierten Wärmetunnel gefördert.

Das Reaktionsprodukt, das in einer Menge von 10 bis 100 kg/h anfällt, wurde abgekühlt und zerkleinert.

Die physikalischen und chemischen Kenndaten sind in Tabelle 7 zusammengefaßt.

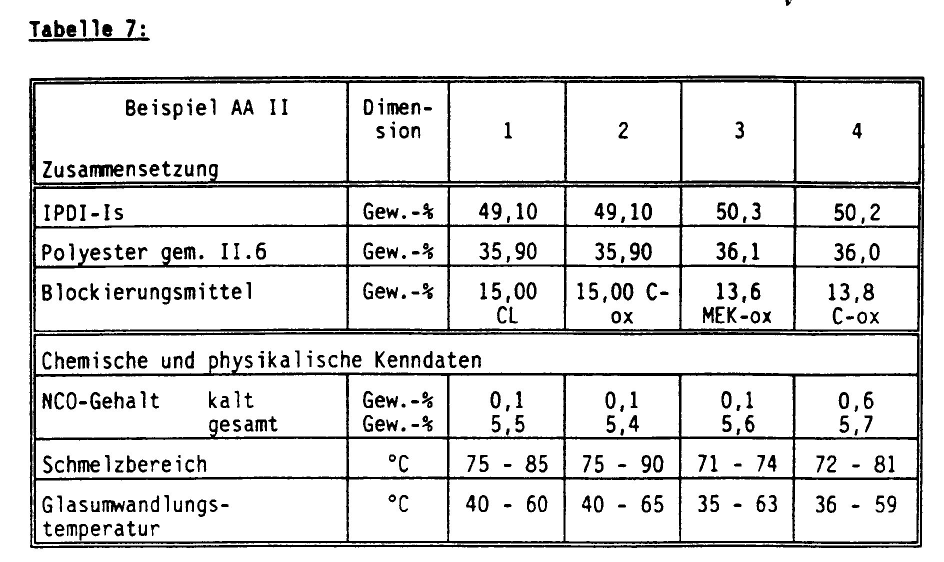

### BB Polyolkomponente

### Allgemeine Herstellungsvorschrift

Die Ausgangskomponeten - Terephthalsäure (Ts) und/oder Isophthalsäure (Is) und/oder Adipinsäure (As) und/oder Dimethylterephthalat (DMT), Hexandiol-1.6 (HD) und/oder Neopentylglykol (NPG) und/oder 1.4-Dimethylolcyclohexan (DMC) und/oder 2.2.4(2.4.4)-Trimethylhexandiol (TMH-d.) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,05 Gew.-% Di-n-butylzinnoxid als Katalysator zugesetzt. Die erste Methanolabspaltung tritt bei einer Temperatur von ca. 170 °C auf. Innerhalb 6 bis 8 h wird die Temperatur auf 200 bis 230 °C erhöht und innerhalb weiterer 12 bis 15 h die Reaktion zu Ende geführt. Der Polyester wird auf 200 °C abgekühlt und durch Anlegen von Vakuum (1,33 mbar) innerhalb 30 bis 45 min weitgehend von flüchtigen Anteilen befreit. Während der gesamten Reaktionszeit wird das Sumpfprodukt gerührt und ein schwacher N₂-Strom durch das Reaktionsgemisch geleitet.

Folgende Tabelle 8 gibt die Polyesterzusammensetzungen und die entsprechenden physikalischen und chemischen Kenndaten wieder.

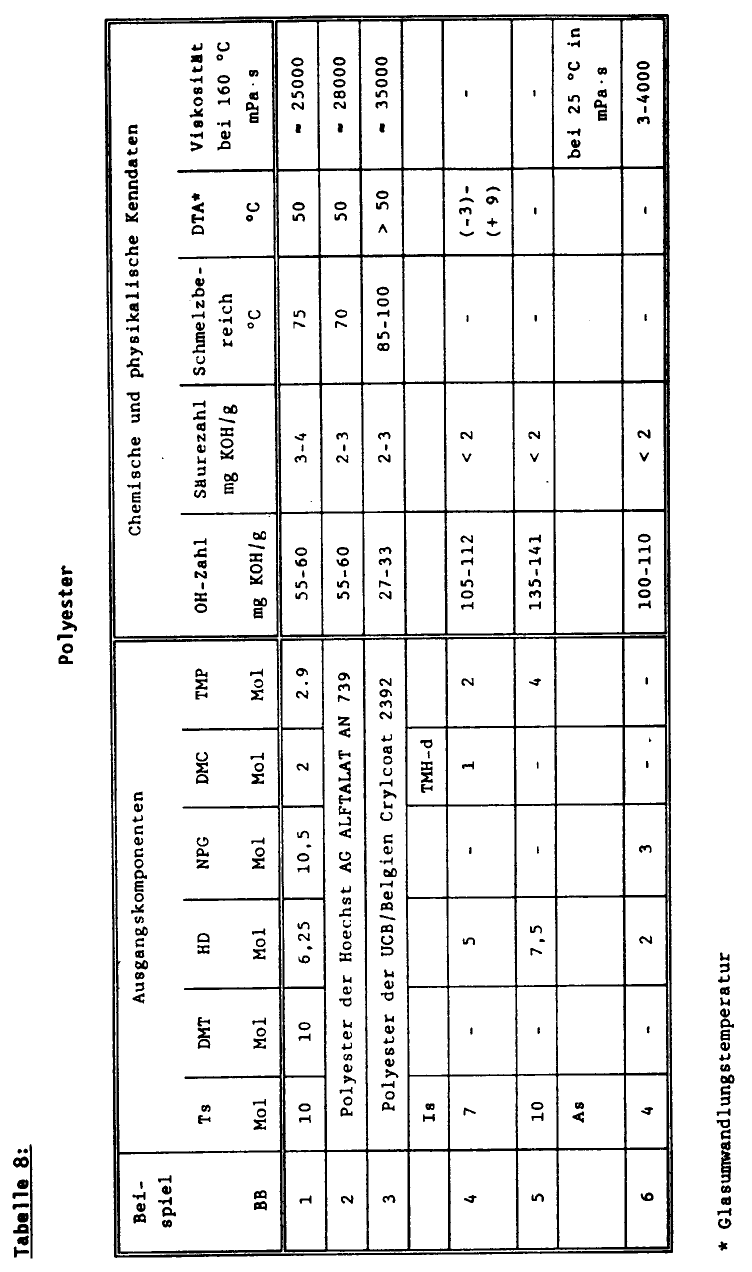

### CC Polyurethan-Pulverlacke

### Allgemeine Herstellungsvorschrift

Die gemahlenen Produkte, Vernetzer, Polyester, Verlaufmittel ggf. Katalysator-Masterbatch, werden gegebenenfalls mit dem Weißpigment in einem Kollergang innig vermischt und anschließend im Extruder bei 80 bis 140 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei Temperaturen zwischen 160 und 200 °C eingebrannt.

### Verlaufmittel-Masterbatch

Es werden 10 Gewichtsprozent des Verlaufmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gewichtsprozent des Katalysators - DBTL - in dem entsprechenden Polyester in der Schmelze homogenisiert und nach dem Erstarren zerkleinert.

Die Abkürzungen in den folgenden Tabellen sind vorgehend genannt (S. 20).

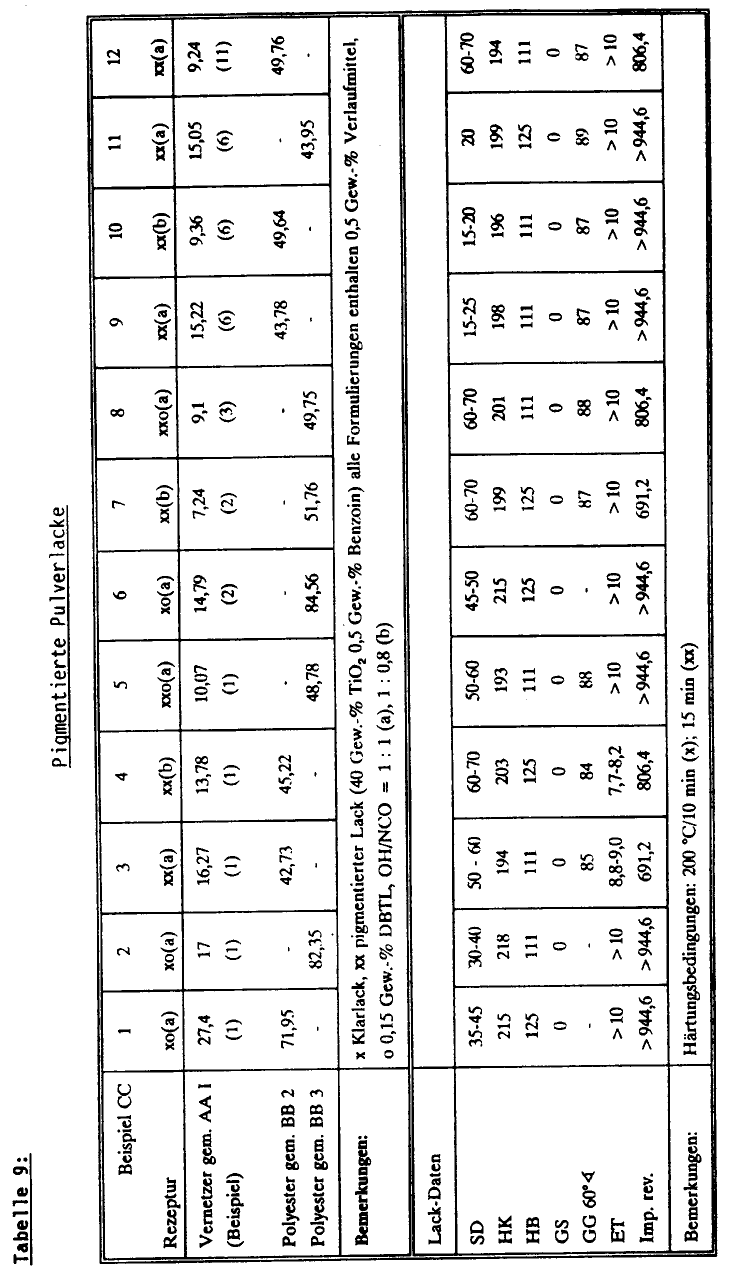

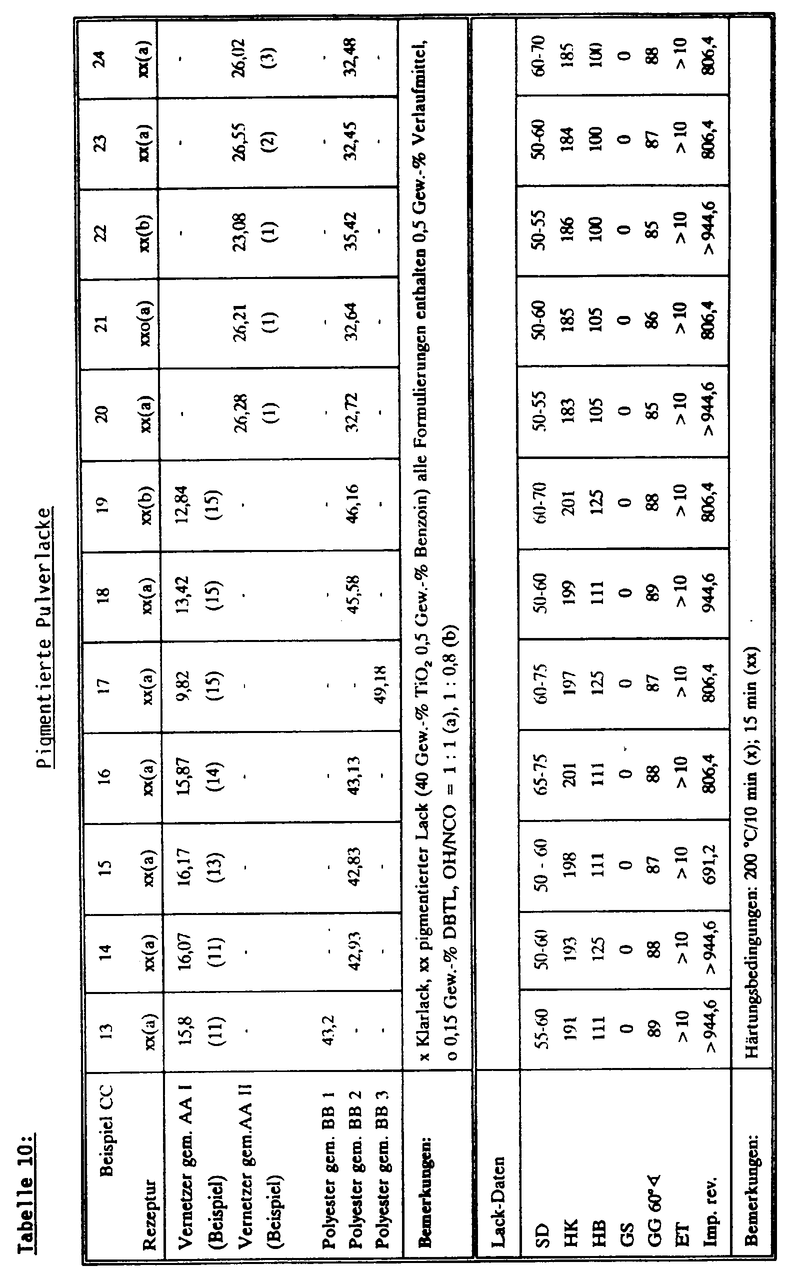

### DD Polyurethan-Einkomponenten-Einbrennlacke

### I. Herstellung der Vernetzerlösung

600 Gew.-T der gemäß AA I oder AA II hergestellten blockierten Polyisocyanat-Addukte wurden in 400 Gew.-T Lösemittelgemisch unter Rühren bei 80 - 90 °C gelöst und die Auslaufzeit im DIN-4-Becher bei 20 °C bestimmt.
a) AA I.1
   n-Butylacetat/Xylol (3 : 5) = 370 Sekunden
b) AA I.6
   n-Butylacetat/Xylol (3 : 5) = 290 Sekunden
c) AA I.11
   n-Butylacetat/Xylol (3 : 5) = 305 Sekunden
d) AA I.15
   n-Butylacetat/Xylol (3 : 5) = 180 Sekunden

### II. Herstellung der Polyesterlösung

600 Gew.-T Polyester gemäß BB 4 und BB 5 wurden unter Rühren in 400 Gew.-T Lösemittelgemisch bei 80 - 90 °C gelöst und die Auslaufzeit im DIN-4-Becher bei 20 °C bestimmt.
a) BB 4
   n-Butylacetat/Xylol (3 : 5) = 271 Sekunden
b) BB 5
   n-Butylacetat/Xylol (3 : 5) = 471 Sekunden

### III. Herstellung der PUR-Einkomponenten-Einbrennlacke

### a) Lackstammlösung

Die 60 gew.-%ige Polyesterlösung wurde unter Rühren mit der berechneten Menge der 60 gew.-%igen Vernetzerlösung bei 60 - 80 °C homogenisiert und die Auslaufzeit im DIN-4-Becher bei 20 °C bestimmt.
1) gem. Beisp. DD I.a und gem. Beisp. DD II.b = 360 Sek.
2) gem. Beisp. DD I.a und gem. Beisp. DD II.a = 305 Sek.
3) gem. Beisp. DD I.b und gem. Beisp. DD II.b = 410 Sek.
4) gem. Beisp. DD I.c und gem. Beisp. DD II.a = 330 Sek.
5) gem. Beisp. DD I.d und gem. Beisp. DD II.b = 320 Sek.
6) gem. Beisp. DD I.d und gem. Beisp. DD II.a = 270 Sek.

### b) Pigmentierte Lacklösungen

Die gemäß DD III a) hergestellten Lackstammlösungen wurden, falls erforderlich, mit weiterem Lösemittelgernisch - entsprechend der Stammlösung - versetzt und anschließend mit Weißpigment (TiO₂) und einem in der PUR-Chemie üblichen Verlaufsmittel und Entschäumer in der Kugelrührwerksmühle abgerieben.

Die Applikation dieser pigmentierten Lacke erfolgte auf entfetteten und/oder vorbehandelten 0,8 - 1 mm Stahl- und/ oder Aluminiumblechen; die Aushärtung wurde in einem Labor-Umlufttrockenschrank durchgeführt; die Schichtdicke der Lackfilme lag je nach Anwendung zwischen 25 und 50 µm.

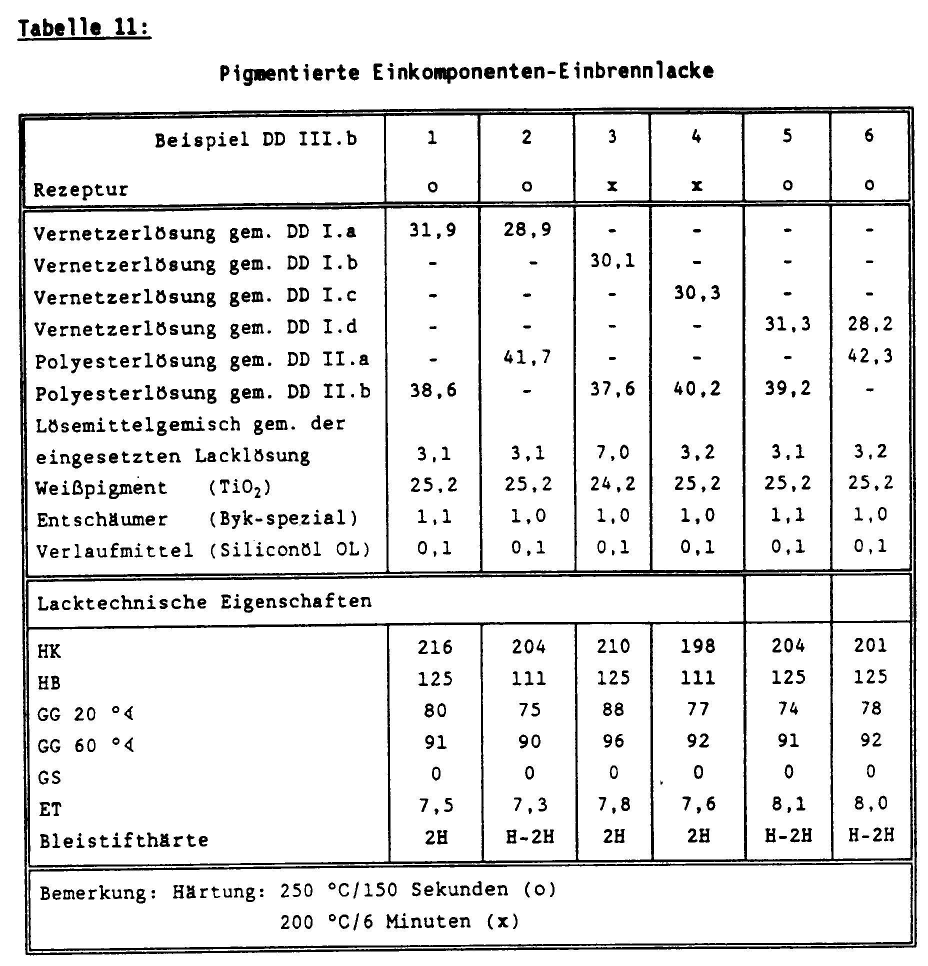

## Patentansprüche

1. Verfahren zur Herstellung von total oder partiell blockierten Polyisocyanaten auf Basis eines Blockierungsmittels und eines mindestens zwei freie NCO-Gruppen enthaltenden Polyisocyanats, gegebenenfalls in Gegenwart eines Kettenverlängerers,
dadurch gekennzeichnet,
daß die total oder partiell blockierten Polyisocyanate mit Viskositäten ≥ 150 000 mPa·s in einem Intensiv-Kneter lösemittelfrei und kontinuierlich hergestellt werden.

2. Verfahren nach Anspruch 1,
dadurch gekennzeichnet,
daß die Reaktion zu blockierten Polyisocyanaten in einem Ein- oder Mehrschneckenextruder, insbesondere in einem Zweischneckenextruder, erfolgt.

3. Verfahren nach den Ansprüchen 1 - 2,
dadurch gekennzeichnet,
daß in den Intensiv-Knetern durch entsprechende Bestückung der Mischkammern und Zusammenstellung der Schneckengeometrie einerseits eine intensive rasche Durchmischung der hochviskosen Produktströme bei gleichzeitigem intensivem Wärmeaustausch und andererseits eine gleichmäßige Durchströmung in Längsrichtung mit möglichst einheitlicher Verweilzeit erfolgt.

4. Verfahren nach den Ansprüchen 1 - 3,
dadurch gekennzeichnet,
daß eine unterschiedliche Temperierung in den einzelnen Gerätegehäusen oder -abschnitten erfolgt.

5. Verfahren nach den Ansprüchen 1 - 4,
dadurch gekennzeichnet,
daß die Umsetzungsprodukte in getrennten Produktströmen zwischen Raumtemperatur und 120 °C dem Intensiv-Kneter zugeführt werden.

6. Verfahren nach den Ansprüchen 1 - 5,
dadurch gekennzeichnet,
daß bei mehr als zwei Produktströmen diese gebündelt zwischen Raumtemperatur und 120 °C zugeführt werden können.

7. Verfahren nach den Ansprüchen 1 - 6,
dadurch gekennzeichnet,
daß Blockierungsmittel und/oder Kettenverlängerer und/oder Katalysator zu einem Produktstrom zusammengefaßt werden.

8. Verfahren nach den Ansprüchen 1 - 7,
dadurch gekennzeichnet,
daß die gegenüber dem Polyisocyanat inerten Zuschlagstoffe gemeinsam mit dem verwendeten Polyisocyanat zu einem Produktstrom zusammengefaßt werden.

9. Verfahren nach den Ansprüchen 1 - 8,
dadurch gekennzeichnet,
daß die Eintrittsstelle der Produktströme in der Reihenfolge variabel und zeitlich versetzt gehandhabt werden kann.

10. Verfahren nach den Ansprüchen 1 - 9,
dadurch gekennzeichnet,
daß die Temperaturen in den Intensiv-Knetern bzw. Extrudern von 60 °C bis 200 °C, vorzugsweise von 90 °C bis 180 °C, mindestens von 110 °C bis 170 °C, betragen.

11. Verfahren nach den Ansprüchen 1 - 10,
dadurch gekennzeichnet,
daß eine Nachreaktionszone angefügt werden kann.

12. Verfahren nach den Ansprüchen 1 - 11,
dadurch gekennzeichnet,
daß die Konfektionierung je nach Viskosität des den Intensiv-Knetern und/oder die Nachreaktionszone verlassenden Produkts zunächst durch weitere Abkühlung auf eine zur späteren Absackung/Silierung hinreichende Temperatur eingeleitet wird, der eine Zerkleinerung nachgeschaltet ist und wobei während des Abkühlens an geeigneter Stelle eine Vorprägung des bevorzugt bandförmig anfallenden Produkts erfolgt, die eine nachfolgende Zerkleinerung in eine gewünschte Partikelgröße bzw. Granulatform vorbereitet und den Staubanfall vermindert.

13. Verwendung der nach den Ansprüchen 1 bis 12 hergestellten total oder partiell blockierten Polyisocyanate für PUR-Pulverlacke und lösemittelhaltige Einkomponenten-PUR-Einbrennlacke.

## Claims

1. A process for the preparation of totally or partially blocked polyisocyanates based on a blocking agent and on a polyisocyanate containing at least two free NCO groups, if desired in the presence of a chain extender, characterized in that the totally or partially blocked polyisocyanates having viscosities ≥ 150,000 mPa·s are prepared without solvent and continuously in an intensive kneading apparatus.

2. A process according to claim 1, characterized in that the reaction to give blocked polyisocyanates is carried out in a single- or multi-screw extruder, in particular in a twin-screw extruder.

3. A process according to either of claims 1-2, characterized in that, in the intensive kneading apparatus, the appropriate equipping of the mixing chambers and the composition of the screw geometry bring about, on the one hand, an intensive and rapid mixing of the highly viscous product streams in conjunction with intensive heat exchange and, on the other hand, uniform flow in the longitudinal direction with a substantially constant residence time.

4. A process according to any of claims 1-3, characterized in that the individual housings or sections of the devices are regulated at different temperatures.

5. A process according to any of claims 1-4, characterized in that the reaction products are fed to the intensive kneading apparatus in separate product streams at from room temperature to 120°C.

6. A process according to any of claims 1-5, characterized in that, in the case of more than two product streams, these can be fed in combined form at from room temperature to 120°C.

7. A process according to any of claims 1-6, characterized in that blocking agent and/or chain extender and/or catalyst are combined into one product stream.

8. A process according to any of claims 1-7, characterized in that the additives which are inert towards the polyisocyanate, together with the polyisocyanate used, are combined into one product stream.

9. A process according to any of claims 1-8, characterized in that the input of the product streams can be made variable in sequence and offset in terms of time.

10. A process according to any of claims 1-9, characterized in that the temperatures in the intensive kneading apparatus or extruders are from 60°C to 200°C, preferably from 90°C to 180°C and most narrowly from 110°C to 170°C.

11. A process according to any of claims 1-10, characterized in that a zone for after-reaction can be appended.

12. A process according to any of claims 1-11, characterized in that the final stages of processing begin, depending on the viscosity of the product leaving the intensive kneading apparatus and/or the after-reaction zone, first by further cooling to a temperature which is adequate for subsequent bagging/containerization operations, with comminution being carried out prior to bagging, and wherein, during cooling, at a suitable point, preimpression of the product - which is obtained preferably in the form of a strip - is carried out in order to prepare for subsequent comminution to a desired particle size or granular form and to reduce the amount of dust formed.

13. The use of the totally or partially blocked polyisocyanates prepared according to any of claims 1 to 12 for PU powder coatings and solvent-containing, one-component PU stoving enamels.

## Revendications

1. Procédé de fabrication de polyisocyanates totalement ou partiellement bloqués à base d'un agent bloquant et d'un polyisocyanate contenant au moins deux groupes NCO libres, le cas échéant en présence d'un agent d'allongement de chaîne,
caractérisé en ce qu'on
fabrique les polyisocyanates totalement ou partiellement bloqués ayant des viscosités égales ou supérieures à 150 000 mPa.s dans une pétrisseuse intensive sans solvant et de façon continue.

2. Procédé selon la revendication 1,
caractérisé en ce qu'on
conduit la réaction menant aux polyisocyanates bloqués dans une extrudeuse à une ou plusieurs vis, en particulier dans une extrudeuse à vis et contre-vis.

3. Procédé selon les revendications 1 et 2,
caractérisé an ce que
le pétrissage intensif s'effectue par un garnissage correspondant des chambres de mélange et par une composition correspondante de la géométrie des vis, d'une part en mélangeant rapidement de manière intensive les courants de produits hautement visqueux avec simultanément un échange de chaleur intensif, et d'autre part an organisant une traversée régulière dans la direction longitudinale avec un temps de séjour aussi uniforme que possible.

4. Procédé selon les revendications 1 à 3,
caractérisé en ce qu'on
procède à un réglage différentiel de la température dans les divers logements ou sections de l'appareil.

5. Procédé selon les revendications 1 à 4,
caractérisé en ce qu'on
introduit dans la pétrisseuse intensive les produits de réaction en courants de produits séparés entre la température ambiante et 120°C.

6. Procédé selon les revendications 1 à 5,
caractérisé en ce que
lorsqu'il y a plus de deux courants de produits, on peut les introduire liés entre la température ambiante et 120°C.

7. Procédé selon les revendications 1 à 6,
caractérisé en ce qu'on
rassemble le produit de blocage et/ou l'agent d'allongement de chaîne et/ou le catalyseur en un courant de produits.

8. Procédé selon les revendications 1 à 7,
caractérisé en ce qu'on
rassemble en un courant de produit avec le polyisocyanate employé les additifs inertes vis-à-vis du polyisocyanate.

9. Procédé selon les revendications 1 à 8,
caractérisé en ce qu'on
peut manipuler l'endroit d'entrée des courants de produits en succession de façon variable et décalée dans le temps.

10. Procédé selon les revendications 1 à 9,
caractérisé en ce que
les températures dans le pétrissage intensif ou selon les cas l'extrusion sont comprises entre 60°C et 200°C, de préférence entre 90°C et 120°C, au moins entre 110°C et 170°C.

11. Procédé selon les revendications 1 à 10,
caractérisé en ce qu'on
peut ajouter une zone de post-réaction.

12. Procédé selon les revendications 1 à 11,
caractérisé en ce que
la combinaison est introduite, selon la viscosité du produit quittant la pétrisseuse intensive et/ou la zone de post-réaction, tout d'abord par un refroidissement ultérieur à une température suffisante pour l'ensachage/ensilage, température à laquelle on effectue ensuite un broyage, et au cours du refroidissement on effectue à l'endroit approprié un préestampage produit apparaissant de préférence sous forme de ruban, qui prépare un broyage ultérieur en une taille particulaire ou forme de granulé désirée et qui diminue l'incidence de la poussière.

13. Utilisation des polyisocyanates totalement ou partiellement bloqués fabriqués selon les revendications 1 à 12 pour des vernis pulvérulents à base de polyuréthane et des vernis au four à un composant de polyuréthane contenant un solvant.
